**Europäisches Patentamt**

**European Patent Office**

**Office européen des brevets**

(19)

(11) Veröffentlichungsnummer: **0 033 062**
**A1**

(12) # EUROPÄISCHE PATENTANMELDUNG

(21) Anmeldenummer: **81100001.7**

(22) Anmeldetag: **01.01.81**

(51) Int. Cl.³: **A 62 C 37/28**
**A 62 C 35/08, F 16 K 17/40**
**F 16 K 31/02**

(30) Priorität: **04.01.80 ES 247812**

(43) Veröffentlichungstag der Anmeldung:
**05.08.81 Patentblatt 81/31**

(84) Benannte Vertragsstaaten:
**AT BE CH FR GB IT LI LU NL SE**

(71) Anmelder: **Ruiz, Alfonso Calvo**
**Paseo Moreras, 4**
**Madrid 21(ES)**

(72) Erfinder: **Ruiz, Alfonso Calvo**
**Paseo Moreras, 4**
**Madrid 21(ES)**

(74) Vertreter: **Riebling, Günter, Dr. Patentanwälte et al,**
**Dr.-Ing., Dipl.-Ing., Ing.(grad) G. Riebling Dr.-Ing.,**
**Dipl.-Ing. P. Riebling Rennerle 10 Postfach 3160**
**D-8990 Lindau(Bodensee)(DE)**

(54) Schnellöffnungsventil.

(57) Das Schnellöffnungsventil wird auf dem Gebiet der Feuerbekämpfung verwendet und ist in einen Behälter eingebaut, der mit einer Druckflüssigkeit gefüllt ist.

Das Ventil besteht aus einem Stahlzylinder (1) mit einer axialen Öffnung, die in zwei Sektoren (2, 3) unterteilt ist. Zwischen den Sektoren wird eine Abstufung (4) gebildet, die den Sitz für den Verschluss (5) bildet. Der Verschluss (5) ist verschiebbar in einer Öffnung (6) in der Expansionskammer (7) gelagert, die in dem äusseren Sektor (3) untergebracht ist. Der Verschluss (5) gleitet in der Öffnung (6) in der Expansionskammer (7) mittels seines Schaftes (12), der an dem gegenüberliegenden Ende eine Ausnehmung (13) aufweist, in der das Ende eines Berstzylinders (14) gelagert ist, in dem eine Sprengpatrone (15) untergebracht ist, die über eine elektrische Leitung (20) mit einer elektronischen Vorrichtung zur Festellung von Feuergefahr verbunden ist. Bei Feuer wird ein elektrisches Signal erzeugt. Die Explosion der Sprengpatrone (15) bewirkt die vollständige Zerstörung des Berstzylinders (14), wodurch der Verschluß (5) verschoben und das Löschmittel freigegeben wird.

FIG.1

- 1 -

---------------------------------------------------------------

Schnellöffnungsventil

---------------------------------------------------------------

Die Erfindung betrifft ein Schnellöffnungsventil, insbesondere zur Verwendung auf dem Gebiet der Feuerbekämpfung, das in einen Behälter eingebaut wird, der mit
einer Druckflüssigkeit gefüllt ist, die zu einem bestimmten Zeitpunkt unter vollständiger Entleerung des
 Behälters nach aussen treten soll.

Das erfindungsgemässe Ventil dient insbesondere für
Feuerlöschgeräte und weist einen Aufbau auf, der darauf
gerichtet ist, die korrekte Funktionsfähigkeit unbegrenzt aufrechtzuerhalten. Diese Eigenschaft ist bei
Feuerlöschgeräten deshalb ausschlaggebend, weil es sich
um Geräte handelt, die für Notfälle vorgesehen sind und
deshalb über sehr lange Zeiträume unbenutzt bleiben, so
dass die Gefahr besteht, dass die erforderliche Kontrolle und Instandhaltung der Funktionsfähigkeit vernachlässigt wird.

Gemäss dem Stand der Technik sind verschiedene Ventiltypen für den Feuerlöschbereich bekannt, die jedoch
insgesamt den Nachteil aufweisen, dass eine ununterbrochene periodische Überprüfung der Funktionsfähigkeit erforderlich ist, oder aber es müssen aufwendige
und teure Spezialteile vorgesehen werden wie im Falle
der bekannten Elektroventile.

Unter den bekannten üentilen müssen als beste technische Lösung diejenigen angesehen werden, die aus einer die untere Zone der Austrittsöffnung verschlies-
-2-

senden Scheibe gebildet sind, die durch die Wirkung einer Explosion im Moment der Öffnung /zum Bersten gebracht wird.

Dieses Verfahren ist kostspielig wegen der zur Herstellung erforderlichen Spezialwerkzeuge und der notwendigen Qualitätskontrolle, denn es handelt sich um
eine durch Tiefziehung hergestellte kreisförmige Membrane mit Rillen zur Einleitung der Berstung.

Diese Scheiben oder Membranen werden aus einem Material auf der Basis von Leichtmetallegierungen hergestellt, wobei die Eigenschaften von Fall zu Fall unterschiedlich sein können.

Diese Ventile werden in Behälter eingebaut, die Halogenmittel enthalten, so dass es erforderlich ist, in
einer vorbestimmten Zeit eine geeigneten Konzentration
zu erreichen, die im konkreten Fall von Halon 1301
($CF_3BR$) 5 % betragen soll. Diese Auflagen wurden bisher nur unvollständig erfüllt, denn die praktischen
Erfahrungen zeigen, dass die Membranen nicht einheitlich bersten, so dass von Fall zu Fall unterschiedliche Durchgangsquerschnitte erhalten werden.

Das Schnellöffnungsventil gemäss der Erfindung behält
von den letztgenannten bekannten Ventilen ausschliesslich die Öffnung auf Grund einer Explosion, während
der gesamte Aufbau ansonsten ganz anders ist, um eine
absolute Funktionssicherheit zu erreichen mit einer
stets gleichen Funktion in Bezug auf den Durchgangsquerschnitt für das im Behälter gespeicherte Druckmittel, wobei ausserdem eine einfache Konstruktion
die Herstellungskosten senkt.

Die erfindungsgemässe Ventilvorrichtung besteht aus
einem Stahlzylinder, der mittels Verschraubung,
Schweissung oder ähnlichem an der Mündung des Behälters befestigt wird, wobei dieser Stahlzylinder eine
axiale Öffnung aufweist, deren Durchmesser sich in einem
Bereich, der dem Befestigungsende am Behälter gegenüberliegt, erheblich erweitert.

In der Zone der Abstufung zwischen den Durchmessern
dieser Öffnung ist ein Sitz für den Verschluss gebildet, der in geschlossener Stellung auf einem Hohlzylinder aus "Pyrex" lagert, in dem eine Sprengpatrone
vorgesehen ist, wobei die Explosion dieser Patrone
den Bruch des Hohlzylinders, die axiale Verschiebung
des Verschlusses und damit die Öffnung des Ventils hervorruft.

Der genannte Verschluss weist einen Schaft auf, der
verschiebbar in einer Öffnung einer Expansionskammer gelagert ist, in der der Berstzylinder und die Sprengpatrone untergebracht sind, wobei diese Expansionskammer
zusammen mit dem Stahlzylinder ein ringförmigen Auslass
für das Druckmittel bilden.

Hierzu weist die Expansionskammer am unteren Ende, das
heisst, auf der dem Verschluss gegenüberliegenden Seite, eine kranzförmige perimetrale Ausdehnung auf, deren
freie Kante mit der Innenwand des Stahlzylinders fluchtet, wobei diese perimetrale Ausdehnung Öffnungen aufweist, die eine Fortsetzung der ringförmigen Ausflussleitung für die Druckflüssigkeit bilden.

Die Expansionskammer weist an der Unterseite eine Gewindeöffnung auf, in die eine Senkschraube zur Distanzverminderung geschraubt wird, auf der ein Zentrierkegel
aufliegt, der seinerseits die Stützfläche für den Berstzylinder bildet, in dem die Sprengpatrone untergebracht ist.

Auf diese Weise kann durch entsprechende Handhabung der
Senkschraube die Stellung von Zentrierkegel, Berstzylinder und Verschluss in Bezug auf den Ventilsitz des
Stahlzylinders reguliert werden, um so den geeignetsten
Druckgrad für die Verschliessung einzustellen.

Selbstverständlich weist die Sprengpatrone die erforderliche elektrische Leitung zum Hervorrufen der Explosion
zum gewünschten Zeitpunkt auf, in welchem Moment der
Berstzylinder vollkommen zerstört wird. Da dieser
Berstzylinder als Abstandshalter zwischen dem Schaft
des Verschlusses und dem Zentrierkegel dient, ermöglicht dessen Zerstörung eine Annäherung zwischen diesen Teilen und somit die Trennung des Verschlusses von
seinem Sitz und als Folge die Öffnung des Ventils.

Aus dem beschriebenen Aufbau ergibt sich, abgesehen von
den bereits genannten Vorteilen, die Unmöglichkeit einer falschen Handhabung, da es sich um ein vollkommen
automatisches, geschlossenes und robustes System handelt, und ausserdem ist keine besondere Wartung erforderlich. Die Funktionsbereitschaft ist stets sofort gegeben, und nach erfolgter Öffnung ist die Wiederherstellung der Funktionsfähigkeit einfach und schnell, da
nur der Berstzylinder und die Sprengpatrone zu ersetzen sind.

Zur Wiederherstellung der Funktionsfähigkeit muss ausserdem eine neue Füllung des Behälters erfolgen, wodurch die Kontrolle der Bereitschaftsstellung der Sicherheitsvorrichtungen garantiert ist.

Schliesslich ist noch vorgesehen, dass am Stahlzylinder ein Manometer zur stetigen Angabe derDruckverhältnisse im Behälter angebracht ist sowie ein Füllventil und eine Steckverbindung zur Schaltung der Sprengpatrone an das Auslösesystem.

Anschliessend soll die Erfindung an Hand der beigefügten Zeichnungen, in denen ein Ausführungsbeispiel dargestellt ist, näher erläutert werden.

In diesem zeigen:

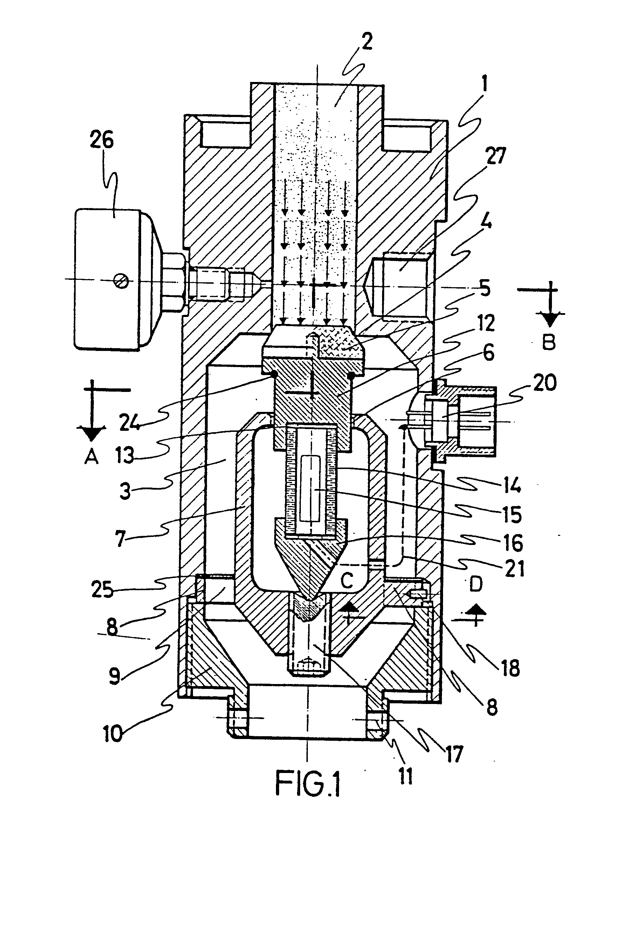

Fig. 1 einen seitlichen Aufriss im Schnitt des erfindungsgemässen Schnellöffnungsventils mit dem Verschluss in geschlossener Stellung,

Fig. 2 eine änsicht gemäss Fig. 1, jedoch nach erfolgter Explosion der Sprengpatrone und Berstung des Hohlzylinders, das heisst, mit dem Verschluss in Öffnungsstellung,

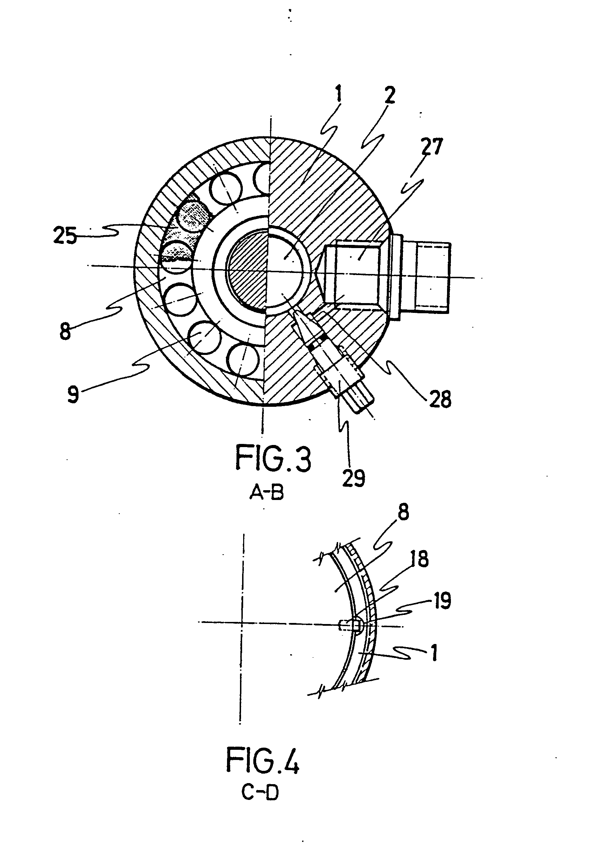

Fig. 3 einen Querschnitt des Ventils in zwei unterschiedlichen Ebenen gemäss der Schnittlinie A-B der Fig. 1,

Fig. 4 einen Schnitt gemäss Linie C-D der Fig. 1 zur Veranschaulichung der Verbindung zwischen der Expansionskammer und dem Stahlzylinder, die eine Relativdrehung zwischen diesen Teilen verhindert.

Wie aus den Zeichnungen ersichtlich, besteht die erfindungsgemässe Ventilvorrichtung aus einem Stahlzylinder 1 mit einer axialen Öffnung, die in zwei Sektoren unterteilt ist, nämlich einem inneren Sektor 2 mit kleinerem Durchmesser und einem äusseren Sektor 3 mit erheblich grösserem Durchmesser, zwischen denen eine Abstufung 4 entsteht, die den Sitz für den Verschluss 5 bildet.

Dieser Verschluss 5 ist verschiebbar in einer Öffnung 6 in der Expansionskammer 7 gelagert, die in dem äusseren Sektor 3 untergebracht ist.

Die Expansionskammer 7 bildet zusammen mit dem Stahlzylinder 1 eine ringförmige Leitung, die mit dem Sektor 3 übereinstimmt, wobei diese Expansionskammer 7 koaxial zum Stahlzylinder 1 angeordnet ist. Hierzu weist die Expansionskammer 7 eine perimetrale Rippe 8 auf, die einen Kranz bildet und mit der dem Stahlzylinder 1 entsprechenden Innenwand des Öffnungssektors bzw. äusseren Sektors 3 fluchtet. Zur Herstellung einer unbehinderten Fortsetzung der Ringleitung 3 weist die perimetrale Rippe 8 eine Reihe von Öffnungen 9 auf, die sich über den grössten Teil ihrer Ausdehnung erstrecken.

Die Expansionskammer 7 ist im Stahlzylinder 1 mittels eines Befestigungsringes 10 gehaltert, der in die untere Mündung dieses Zylinders 1 eingeschraubt ist, wobei dieser Ring in diametraler Gegenüberstellung Bohrungen 11 aufweist, die die Schraubverbindung vereinfachen.

Der Verschluss 5 gleitet in der Öffnung 6 in der Expansionskammer 7 mittels seines Schaftes 12, der an dem gegenüberliegenden Ende eine Ausnehmung 13 aufweist, in der das Ende eines Berstzylinders 14 aus "Pyrex" gelagert ist. Dieses Material besitzt eine hohe Druckfestigkeit auf Grund seines hohen Härtegrades, jedoch entbehrt es jeglicher Elastizität, so dass der Widerstand

gegen die Expansionswelle der Sprengpatrone 15 äusserst gering ist.

Der Berstzylinder 14 ist mit seinem gegenüberliegenden
Ende auf einem Zentrierkegel 16 gelagert, der mit seinem Scheitel auf einer Senkschraube 17 zur Abstandsänderung ruht, die an der dem Verschluss 5 gegenüberliegenden Seite der Expansionskammer 7 vorgesehen ist.

Aus der bisherigen Beschreibung ergibt sich, dass die
Expansionskammer 7 eine starre Halterung gegenüber dem
Stahlzylinder 1 einnimmt, wobei der Verschluss 5 sich
auf seinem Sitz 4 abstützt und der Berstzylinder 14 als
Abstandshalter zwischen dem Schaft 12 des Verschlusses
5 und dem Zentrierkegel 16 dient.

Der Druck, mit dem sich der vorzugsweise aus Neopren,
Teflon oder ähnlichem hergestellte Verschluss 5 auf
dem Sitz 4 abstützt, kann mittels krehung der Senkschraube 17 reguliert werden.

Um zu verhindern, dass die Expansionskammer 7 zusammen
mit der Stellschraube 17 dreht, ist auf einem Punkt der
perimetralen Rippe 8 an der Expansionskammer 7 ein kleiner Bolzen 18 vorgesehen, der seitlich herausragt und
in eine Ausnehmung 19 an der Innenseite des Stahlzylinders 1 eingreift.

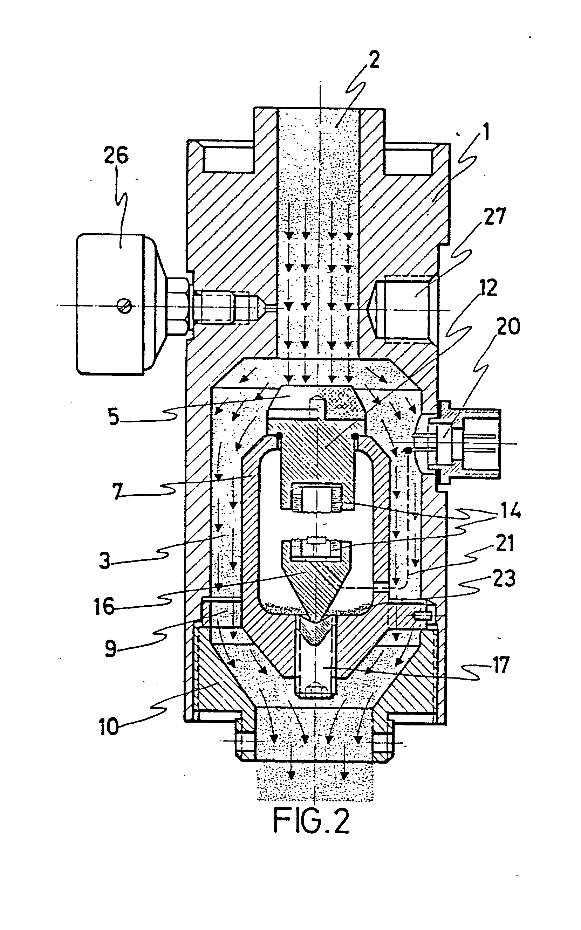

Wie aus Fig. 2 ersichtlich, wird bei Feststellung einer
Notsituation, z.B. Rauchentwicklung, Flammenbildung
oder überdurchschnittliche Temperaturerhöhung durch
eine elektronische Vorrichtung ein elektrisches Signal
ausgelöst, das die Betätigung der Feuerlöschgeräte
verursacht. Dieses elektrische Signal erreicht die Ventilvorrichtung über die Steckverbindung 20, die über das elektrische Kabel 21 mit der Sprengpatrone 15 verbunden ist.

Die hierdurch verursachte Explosion der Sprengpatrone
15 bewirkt die vollständige Zerstörung des Berstzylinders 14 (wie aus Fig. 2 ersichtlich), wobei normalerweise pulverförmige Rückstände ohne Splitter entstehen. Durch die Zerstörung des Hohlzylinders 14, der den
Verschluss 5 gegen seinen Sitz 4 hält, bewirkt der
Druck im Behälter die Verschiebung des Verschlusses
und damit die vollständige Öffnung, die in allen Fällen immer dieselbe Durchgangsgrösse freigibt.

Um zu vermeiden, dass die Rückstände 23 der Explosion
ins Freie gelangen, ist vorgesehen, dass am Schaft 12
des Verschlusses eine Abstufung angebracht ist, auf
der ein Rundschnurring 24 sitzt, der eine feste Dichtung für die Öffnung 6 bildet, die an der Mündung entsprechend abgeschrägt ist.

Für den Fall, dass doch einmal Splitter entstehen sollten und damit diese auf keinen Fall nach aussen gelangen können, was durch die Öffnung 6 der Expansionskammer erfolgen könnte, ist vor dem hermetischen Verschluss
durch den Rundschnurring 24 an der Abstufung des Schaftes 12 in der ringförmigen Leitung 3 über dem perimetralen Flügel 8 ein Filter 25 aus rostfreiem Maschendraht
vorgesehen.

Die Ventilvorrichtung weist schliesslich am Sektor 2
mit kleinerem Durchmesser ein Manometer 26 auf, das
eine stetige Kontrolle des Drucks im behälter ermöglicht,
sowie eine Zuleitung zur Füllung dieses Behälters, die
eine Mündung 27 mit Gewinde aufweist zur Anbringung ei-

- 9 -

nes Anschlußstutzens, wobei sich die Mündung in eine
Zuleitung 28 verlängert, die einen gekröpften Verlauf
hat, und in der Kröpfungszone ist ein Gewindebolzen
29 als Verschluss vorgesehen.

Patentansprüche

1. Schnellöffnungsventil, insbesondere zur Verwendung
in Feuerlöschgeräten mit automatischer Aktivierung,
d a d u r c h   g e k e n n z e i c h n e t  , dass es
einen am Behälter des Löschmittels befestigten Stahlzylinder (1) zur Befestigung mittels Verschraubung oder
Schweissung an den Behälter des Löschmittels aufweist,
der zwei axiale fluchtende Öffnungen mit verschiedenen
Durchmessern aufweist, einem inneren Sektor (2) mit
kleinerem Durchmesser und einem Sektor (3) mit erheblich grösserem Durchmesser, aufweist, zwischen denen
eine Abstufung (4) vorgesehen ist, dass im Sektor (3)
mit grösserem Durchmesser eine Expansionskammer (7) untergebracht ist, die aus einem koaxial zum Stahlzxlinder (1) angebrachten Hohlzylinder besteht, und eine
Öffnung (6) aufweist, aus der der Schaft (12) eines
Verschlusses (5) herausragt, der sich auf der genannten Abstufung (4) abstützt, dass auf der gegenüberliegenden Seite eine Senkschraube zur Veränderung des Abstandes vorgesehen ist (17), dass auf dieser Stellschraube (17) ein Zentrierkegel (16) ruht und dass
zwischen diesem Kegel (16) und dem Schaft (12) des Verschlusses (5) ein Berstzylinder (14) untergebracht
ist, in dem eine Sprengpatrone (15) untergebracht ist,
die über eine elektrische Leitung (21) mit einer Steckverbindung (20) verbunden ist, der an eine an sich bekannte elektronische Vorrichtung zur Feststellung von
Feuergefahr geschaltet ist.

2. Schnellöffnungsventil gemäss Anspruch 1,
d a d u r c h   g e k e n n z e i c h n e t  , dass die
Expansionskammer (7), die im Sektor (3) mit grösserem Durchmesser eine ringförmige Leitung für das Löschmittel bildet, mit dem Stahlzylinder (1) durch einen perimetralen Flügel (8) verbunden ist, der in eine Ausnehmung am Zylinder (1) eingreift und durch einen Befestigungsring gehalten wird, der (10) in die äussere Mündung des Zylinders (1) geschraubt ist, dass der perimetrale Flügel (8) an seinem Umfang Öffnungen (9) aufweist, die die Fortsetzung der ringförmigen Leitung (3) bilden, dass dieser Flügel (8) seitlich einen kleinen Bolzen (18) aufweist, der in eine Ausnehmung (19) an der Innenseite des Zylinders (1) eingreift und die Relativdrehung zwischen diesen Teilen verhindert, dass auf diesem perimetralen Flügel (8) ein Filter (25) aus rostfreiem Maschendraht aufgebracht ist und dass an der Verbindungsstelle zwischen dem Verschluss (5) und seinem Schaft (12) ein Rundschnurring (24) zur hermetischen Schliessung der Öffnung (6) der Expansionskammer (7) vorgesehen ist.

3. Schnellöffnungsventil gemäss den Ansprüchen 1 und 2, d a d u r c h   g e k e n n z e i c h n e t , dass am Sektor (2) mit kleinerem Durchmesser des Stahlzylinders (1) ein Manometer (26) vorgesehen ist sowie eine Zuleitung zur Füllung des Behälters, die eine Mündung (27) mit Gewinde zur Anbringung eines Anschlußstutzens aufweist und sich in eine Zuleitung (28) mit gekröpftem Verlauf verlängert, wobei in der Kröpfungszone ein Gewindebolzen (29) vorgesehen ist, der axial verschiebbar angeordnet ist.

FIG.1

FIG.2

3

0033062

FIG.3
A-B

FIG.4
C-D

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 048 104 (AUPHAN)  * Anspruch 1; Fig. 2, 5 *  -- | 1 |
| X | FR - A - 1 526 825 (BERTIN ET CO.)  * Fig. 3, 4 *  -- | 1 |
| X | US - A - 4 158 322 (HARDESTY)  * Anspruch 1; Fig. 2, 3 *  -- | 1 |
| X | US - A - 2 607 510 (RITCHIE)  * Fig. 1 *  -- | 1 |
| | DE - A - 2 233 876 (GRAVINER)  * Ansprüche 1, 11; Fig. 7 *  -- | 1 |
| | FR - A - 2 171 476 (S.E.A.P.)  * Anspruch 1; Fig. 3 *  -- | 1 |
| | US - A - 3 447 609 (HARVEY)  * Fig. 2 *  -- | 1 |
| | US - A - 2 804 929 (PLUMMER)  * Fig. 1 *  -- | 1 |
| A | DE - C - 316 565 (SIEMENS-SCHUCKERT-WERKE)  * Anspruch 1; Fig. 1 *  -- | 1 |

./..

### KLASSIFIKATION DER ANMELDUNG (Int. Cl.³)

A 62 C   37/28
A 62 C   35/08
F 16 K   17/40
F 16 K   31/02

### RECHERCHIERTE SACHGEBIETE (Int. Cl.³)

A 62 C   13/00
A 62 C   35/00
A 62 C   37/00
F 16 K   13/06
F 16 K   17/00
F 16 K   31/02

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 19-03-1981 | KANAL |

EPA form 1503.1   06.78

**Europäisches Patentamt**

**EUROPÄISCHER RECHERCHENBERICHT**

| EINSCHLÄGIGE DOKUMENTE | | KLASSIFIKATION DER ANMELDUNG (Int. Cl.³) · |
|---|---|---|
| **Kategorie** | **Kennzeichnung des Dokuments mit Angabe, soweit erforderlich, der maßgeblichen Teile** | **betrifft Anspruch** | |
| A | <u>FR - A - 541 330</u> (NEWTON) <br><br> * Fig. 1 bis 4 * <br><br> -- | 1 | |
| A | <u>US - A - 3 254 661</u> (PURFURST) <br><br> * Fig. 1 * <br><br> -- | 1 | |
| A | <u>US - A - 1 700 591</u> (LOEPSINGER) <br><br> * Fig. 1, 2 * <br><br> ---- | 1 | |

RECHERCHIERTE SACHGEBIETE (Int. Cl.³)

EPA Form 1503.2 06.78